# EUROPÄISCHE PATENTANMELDUNG

(11) **EP 1 050 738 A2**
(43) Veröffentlichungstag der Anmeldung: **08.11.2000**
(21) Anmeldenummer: 00109240.2
(22) Anmeldetag: 28.04.2000
(51) Int. Cl.: G01B 5/00

(54) **Trägerkopf**

(30) Priorität: 03.05.1999 DE 29908179 U
(71) Anmelder: Junker & Partner GmbH, 66636 Tholey (DE)
(72) Erfinder: Junker, Franz-Rudolf, 66636 Tholey-Sotzweiler (DE)
(74) Vertreter: Bernhardt, Winfrid, Dr.-Ing.

(57) **Zusammenfassung**

Die Erfindung betrifft ein Trägerkopf für Halterungssystem zur Halterung von Werkstücken, insbesondere aus Blech oder einem anderen Lagenmaterial hergestellten Formteilen (6), in einer Vermessungsposition, wobei der Trägerkopf einen gegen das Werkstück anlegbaren Trägeranschlag aufweist.
Erfindungsgemäß ist der Trägeranschlag (5) in unterschiedlichen Einstellpositionen fixierbar. Gemäß dieser Erfindungslösung läßt sich mit geringem Arbeitsaufwand innerhalb der Einstellgrenzen über die Trägerköpfe eine Endanpassung bzw. Feineinstellung der Halterungsvorrichtung an zu halternde Werkstücke durchführen, wobei die Trägeranschläge entsprechend den Maßen zu halternder Werkstücke in gewünschten Raumpositionen angeordnet werden.

## Beschreibung

Die Erfindung betrifft einen Trägerkopf für Halterungssysteme zur Halterung von Werkstücken, insbesondere aus Blech oder einem anderen Lagenmaterial hergestellten Formteilen, in einer Vermessungsposition, wobei der Trägerkopf einen gegen das Werkstück anlegbaren Trägeranschlag aufweist.

Solche Halterungssysteme mit Trägerköpfen für die Aufnahme des Werkstücks werden in der Automobilindustrie, insbesondere in den Entwicklungs- und Designabteilungen, im Rahmen der Vermessung von Karosserieteilen oder Fahrzeuginnenverkleidungen eingesetzt. Dabei wird das gegen die Trägerköpfe anliegende Werkstück durch eine Längenmeßeinrichtung, z.B. eine Meßtaster aufweisende Koordinatenmeßeinrichtung, an interessierenden Stellen abgetastet. Die Halterungsteile sind in bezug auf die Längenmeßeinrichtung in einer bestimmten Position angeordnet, wobei die Längenmeßeinrichtung gespeicherte Positionswerte von Halterungsteilen als Bezugswerte für die Ermittlung von Werkstückabmessungen dienen können.

Der vorliegenden Erfindung liegt die Aufgabe zugrunde, einen neuen Trägerkopf zu schaffen, durch den die Variabilität der bekannten Halterungssysteme verbessert werden kann.

Der diese Aufgabe lösende Trägerkopf nach der Erfindung ist dadurch gekennzeichnet, daß der Trägeranschlag in unterschiedlichen Einstellpositionen fixierbar ist.

Gemäß dieser Erfindungslösung läßt sich mit geringem Arbeitsaufwand innerhalb der Einstellgrenzen über die Trägerköpfe eine Endanpassung bzw. Feineinstellung der Halterungsvorrichtung an zu halternde Werkstücke durchführen, wobei die Trägeranschläge entsprechend den Maßen zu halternder Werkstücke in gewünschten Raumpositionen angeordnet werden.

Der Trägeranschlag ist zur Verstellung in bezug auf wenigstens eine Raumkoordinate verschieb- oder/und drehbar. Um den Trägeranschlag in jeder gewünschten Raumposition innerhalb des Einstellbereichs anordnen zu können, kann eine Translations- und Drehverstellung in bezug auf drei zueinander senkrechte Raumkoordinaten vorgesehen sein.

In einer bevorzugten Ausführungsform der Erfindung sind mehrere, je nach gewünschten Verstellfunktionen kombinierbare Trägerkopfmodule vorgesehen. Der Trägerkopf kann zur Translationsverstellung des Trägeranschlags gegeneinander in einer Führung verschiebbare Module aufweisen. Insbesondere können zur Translationsverstellung des Trägeranschlags gegeneinander kreuzweise verschiebbarer Module vorgesehen sein, so daß eine Translationsverstellung des Trägeranschlags entlang zweier, zueinander senkrechter Raumkoordinaten möglich ist.

In einer bevorzugten Ausführungsform der Erfindung umfaßt der Trägerkopf einen an einem Trägerteil des Halterungssystems montierbaren Basismodul, wenigstens einen Zwischenmodul und einen den Trägeranschlag aufweisenden Anschlagmodul. Als Zwischenmodul kann beispielsweise der vorangehend erwähnte Modul mit zwei miteinander verschraubbaren Modulteilen dienen, wobei kreuzweise der Zwischenmodul gegen den Basismodul und der Anschlagmodul gegen den Zwischenmodul verschiebbar sein kann.

Anstelle des gegen den Zwischenmodul verschiebbaren Anschlagmoduls kann aber ein weiterer, gegen den genannten Zwischenmodul verschiebbarer Zwischenmodul vorgesehen sein.

Vorzugsweise ist der Anschlagmodul auf den angrenzenden Zwischenmodul aufsteckbar, so daß vorteilhaft mit geringem Aufwand ein Austausch von unterschiedlichen, an jeweilige Werkstücke angepaßten Anschlagmodulen erfolgen kann.

In weiterer Ausgestaltung der Erfindung weist der Trägerkopf einen Modul mit zur Drehverstellung des Trägeranschlags gegeneinander verschwenkbaren oder/und eine gemeinsame Achse verdrehbaren Modulteilen auf. Auch ein solcher Modul kann als Zwischenmodul dienen, wobei z.B. einer der gegeneinander verschwenkbaren Modulteile gegen eine Kugelführungsfläche des anderen Modulteils anliegt.

In der bevorzugten Ausführungsform der Erfindung umfaßt die Führung eine hinterschnittene Führungsnut in einem der gegeneinander verschiebbaren Module und einen von dem anderen Modul in die Führungsnut vorstehenden Nutenstein. In der hinterschnittenen Führungsnut ist der Nutenstein entlang einer Koordinatenrichtung verschiebbar.

Vorzugsweise ist der Nutenstein gegen den anderen Modul senkrecht zur Führungsrichtung bewegbar und der andere Modul weist Einrichtungen zur Verklemmung des Nutensteins in der Führungsnut auf. Durch diese Verklemmung sind die Module aneinander ankoppelbar und gegeneinander fixierbar.

Die Erfindung soll nun anhand von Ausführungsbeispielen und der beiliegenden, sich auf diese Ausführungsbeispiele beziehenden Zeichnungen näher erläutert und beschrieben werden. Es zeigen:
- Fig. 1: ein erfindungsgemäße Trägerköpfe verwendendes Halterungssystem,
- Fig. 2: einen Basismodul und einen damit verbundenen Zwischenmodul eines erfindungsgemäßen Trägerkopfes,
- Fig. 3: den in Fig. 2 gezeigten Basismodul in einer Draufsicht,
- Fig. 4 bis 6: einen Zwischenmodul eines erfindungsgemäßen Trägerkopfes mit durch Schraubverdrehung verstellbaren Modulteilen,
- Fig. 7 bis 10: einen weiteren Zwischenmodul eines erfindungsgemäßen Trägerkopfes auf den Anschlagmodule aufsteckbar sind,
- Fig. 11 bis 14: einen Zwischenmodul eines erfindungsgemäßen Trägerkopfes, der eine Drehverstellung des Trägerkopfes erlaubt,
- Fig. 15 bis 18: einen Zwischenmodul eines erfindungsgemäßen Trägerkopfes, der neben einer Translationsverstellung eine Drehverstellung erlaubt, und
- Fig. 19: ein Kombinationsbeispiel eines aus mehreren Modulen zusammengesetzten Trägerkopfes nach der Erfindung.

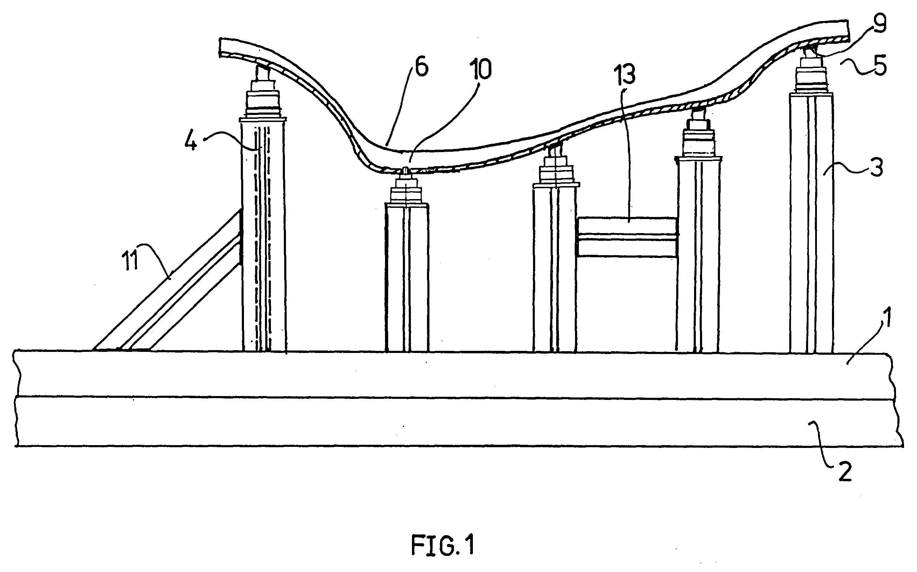

Mit dem Bezugszeichen 1 ist in der Fig. 1 eine Basisplatte bezeichnet, die auf einer Grundplatte 2 einer (im übrigen nicht gezeigten) Koordinatenmeßeinrichtung in einer bestimmten Position in bezug auf die Koordinatenmeßeinrichtung angeordnet ist. Auf der Basisplatte 1 sind Trägersäulen 3 angeordnet, die in hinterschnittenen Nuten in der Basisplatte 1 jeweils über einen Nutenstein befestigt sind (nicht gezeigt). Bei den Trägersäulen 3 handelt es sich in dem gezeigten Ausführungsbeispiel um Aluminiumhohlprofile mit einem quadratischen Querschnitt und einer Quadratseitenlänge von 50 mm. An jeder Seite der quadratischen Profile ist eine Längsnut 4 vorgesehen. Wie in Fig. 1 beispielhaft an einer der Säulen 3 durch Strichlinien angedeutet ist, handelt es sich um hinterschnittene Nuten.

Auf jeder der Säulen 3 ist jeweils ein Trägerkopf 5 mit einer Werkstückanschlagfläche 9 montiert. Auf den in unterschiedlicher Weise aus verschiedenen Modulen aufgebauten Trägerköpfen 5 liegt ein Werkstück 6 auf, z.B. ein aus Blech gepreßtes Karosserieteil oder ein instabiles, aus einem Kunststofflagenmaterial, z.B. durch Vakuumtiefziehen, hergestelltes Formteil. Durch die Halterung über mehrere Trägerköpfe ist gesichert, daß sich das Werkstück nicht verformt, d.h. im gehaltenen Zustand die dafür vorgesehene Konstruktionsform aufweist.

Von der Werkstückanlagefläche einer der Trägerköpfe 5 steht ein Dorn 10 vor, welcher in eine Bohrung in dem Werkstück 6 eingreift.

Mit den Bezugszeichen 11 bis 13 sind Querverstrebungen bezeichnet, die an den betreffenden Trägersäulen bzw. der Basisplatte 1 in gleicher Weise über einen Nutenstein befestigt sind wie die Trägersäulen 5 auf der Basisplatte 1. Die Verstrebungen 11 bis 13 sind in dem gezeigten Ausführungsbeispiel aus dem gleichen Aluminiumhohlprofil wie die Trägersäulen 3 gebildet.

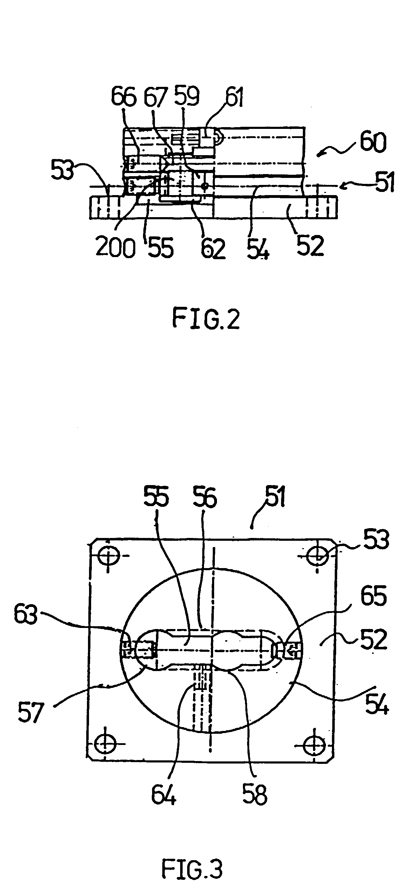

Im folgenden werden anhand der Fig. 2 bis 18 Modulteile beschrieben, aus denen sich verschiedene Varianten von Trägerköpfen 5 zusammensetzen lassen, die in dem vorangehend erläuterten Halterungssystem verwendet werden können und die Möglichkeit zur Endanpassung der Halterung an bestimmte Werkstücke bieten.

Mit dem Bezugszeichen 51 ist in den Fig. 2 und 3 ein Basismodul bezeichnet, der eine Grundplatte 52 mit Bohrungen 53 an vier Ecken aufweist, über die der Basismodul 51, ggf. über eine Zwischenplatte. stirnseitig auf eine Trägersäule 3 mit quadratischem Querschnitt aufschraubbar ist. Von der Grundplatte 52 erhebt sich ein Vorsprung 54 mit einer Führungsnut 55, welche sich in der Tiefe bis in die Grundplatte 52 hinein erstreckt. Wie Strichlinien 56 in Fig. 3 andeuten, ist die Nut 55 teilweise hinterschnitten. Lediglich an kreisförmigen Aufweitungen 57 und 58 liegt keine solche Hinterschneidung vor.

In der Anordnung von Fig. 2 greift in die Nut 55 als darin verschiebbarer Nutenstein ein längliches Fußteil 59 eines auf dem Basismodul 51 angeordneten weiteren Moduls 60 ein. Der Modul 60 weist eine der Führungsnut 55 im Basismodul 51 entsprechende Führungsnut 61 aufweist, welche in der Draufsicht die Nut 55 im Basismodul 51 kreuzt.

Durch eine Bohrung in dem länglichen Fußteil 59 erstreckt sich ein Bolzen 200, an dessen einem Ende eine über das Fußteil 59 vorstehende, in die Hinterschneidungen der Nut 55 eingreifende Platte 62 angebracht ist. Das in der Nut 55 verschiebbare Fußteil 59 ist als vom Hauptblock des Moduls 60 getrenntes Teil ausgebildet, das in eine Ausnehmung in dem Hauptblock eingepaßt ist.

Das Bezugszeichen 66 weist auf eine in dem weiteren Modul 60 vorgesehene Madenschraube mit einer Konusspitze hin, die in eine entsprechend der Konusspitze eingesenkte Stirnfläche eines Bolzens 67 eingreift. Auf der der Madenschraube 60 gegenüberliegenden Seite des Bolzens 67 ist (in Fig. 2 nicht sichtbar) eine der Schraube 66 entsprechende Madenschraube angeordnet. Der Bolzen 67 ist durch eine Querbohrung in dem Bolzen 200 geführt und seine der Konusfläche entsprechende Stirnfläche ist zu der Konusspitze der Madenschraube 66 bzw. der ihr gegenüberliegenden Madenschraube etwas versetzt angeordnet.

Mit den Bezugszeichen 63 und 65 sind in dem Vorsprung 54 vorgesehene Stellschrauben bezeichnet, mit deren Hilfe das Fußteil 59 in der Nut 55 in eine gewünschte Stellung verschiebbar ist.

Zur Anbringung des weiteren Moduls 60 auf dem Basismodul 51 wird die Platte 62 an dem Bolzen 200 durch eine der Aufweitungen 57 oder 58 in die Nut 55 eingeführt und der weitere Modul 60 verschoben, so daß die Platte 62 in einen hinterschnittenen Teil der Führungsnut 55 gelangt. Mit Hilfe der Stellschrauben 63,65 läßt sich der Modul 60 auf dem Modul 51 in eine gewünschte Stellung verschieben. In der gewünschten Stellung wird die Madenschraube 66 und die ihr gegenüberliegende nicht gezeigte Madenschraube angezogen. Durch den erwähnten Versatz der Konusflächen kommt es dadurch zu einer Anhebung der Platte 62 und damit zu einer gegenseitigen Verklemmung der Module 51,60. Schon vor der Verstellung mit Hilfe der Stellschrauben 63,65 kann durch die Madenschrauben eine leichte Verklemmung der Module erfolgen, wobei diese Verklemmung vorteilhaft eine Dämpfung erzeugt, welche die Feineinstellung mit Hilfe der Stellschrauben 63,65 erleichtert. Zur endgültigen Arretierung des Moduls 60 in einer bestimmten Position auf dem Modul 61 kann der Fußteil 59 durch eine Bohrbuchse 64 hindurch angebohrt und einen durch die Bohrbuchse geführten Stift in der eingestellten Position fixiert werden. Auf dem Modul 60 könnte ein weiterer Modul in der vorangehend beschriebenen Weise befestigt werden, z.B. ein Modul mit einer einen Trägeranschlag bildenden Werkstückanlagefläche. Dieser weitere Modul wäre dann in der Führungsnut 61 senkrecht zur Führungsnut 58 und der Trägeranschlag damit in zwei zueinander senkrechten Koordinatenrichtungen (x,y) verschiebbar.

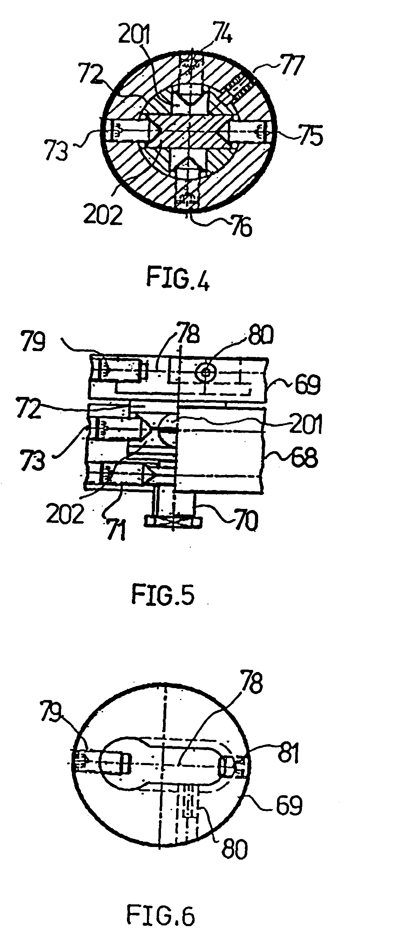

Es wird nun auf die Fig. 4 bis 6 Bezug genommen, wo ein weiterer, z.B. auf den Basismodul 51 aufsetzbarer Trägerkopfmodul gezeigt ist.

Dieser Modul besteht aus einem unteren Teil 68 und einem oberen Teil 69, wobei der untere Teil 68 ein Fußteil 70 aufweist, das dem Fußteil 59 des Moduls 60 von Fig. 2 entspricht. Eine Madenschraube 71 entspricht der Madenschraube 66 von Fig. 2.

Der obere Teil 69 des in den Fig. 4 bis 6 gezeigten Moduls weist einen zylindrischen Zapfen 72 auf, der in eine entsprechende Ausnehmung in dem unteren Teil 68 des Moduls eingreift, in der axial entlang einer weiteren Koordinate (z) verschiebbar ist. In dem zylindrischen Zapfen 72 sind sich kreuzende Bohrungen vorgesehen, durch welche Bolzen 201 und 202 geführt sind. Damit sich die Bolzen 201 und 202 entsprechend den sich kreuzenden Bohrungen ebenfalls kreuzen können, sind sie über einen Teil ihrer Zylinderlänge halbiert. An den Enden weisen die Bohrungen konische Vertiefungen bzw. einem halben Konus entsprechende Ausnehmungen auf, in welche Madenschrauben 73 bis 76 eingreifen, für die in dem unteren Teil 68 Gewindebohrungen vorgesehen sind. Jeweils die Achsen der Madenschrauben 73 und 75 bzw. 74 und 76 sind zueinander ausgerichtet und in Richtung der Z-Koordinate derart versetzt zueinander angeordnet, daß durch Drehung an dem Madenschraubenpaar 73,75 der zylindrische Zapfen 72 in einer Z-Richtung und durch Drehung an den Madenschrauben 74,76 der Zapfen 72 in der zu dieser Richtung entgegengesetzten Richtung verschiebbar ist.

Der zylindrische Zapfen 72 ist über eine Madenschraube 77 in einer gewünschten Drehstellung sowie in einer gewünschten Verschiebungsstellung arretierbar. Zur Arretierung wäre auch eine Verstiftung denkbar. Es ist ferner möglich, den Zapfen 72 gegen Drehung durch eine Feder zu sichern, die in eine Nut in dem oberen Teil und eine Nut in dem Zapfen eingreift.

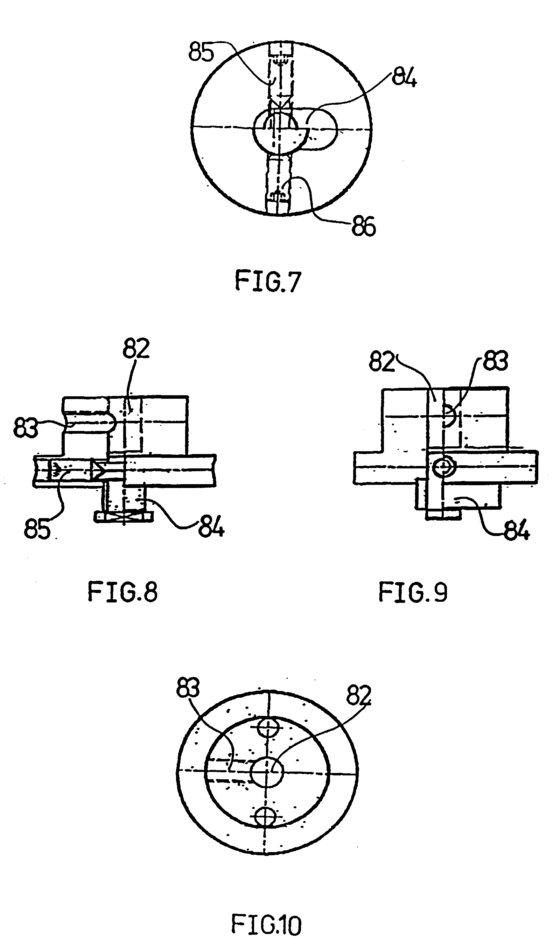

Der obere Teil 69 des Moduls von Fig. 4 bis 6 weist eine teilweise hinterschnittene Nut 78 auf, in welcher ein dem Fußteil 70 bzw. 59 entsprechendes Fußteil eines auf den Modul aufsetzbaren weiteren Moduls, z.B. des in Fig. 7 bis 10 gezeigten Moduls durch Madenschrauben 79,81 verschiebbar und durch eine Verstiftung 80 arretierbar ist.

In dem Modul von Fig. 7 bis 10 ist ein Steckloch 82 vorgesehen, so daß ein weiterer Trägerkopfmodul auf diesen Modul aufsteckbar ist, z.B. der in Fig. 1 gezeigte Modul mit dem Dorn 10. In dem Steckloch 82 ist ein Steckzapfen durch eine Schraube arretierbar, welche in eine Gewindebohrung 83 eingedreht werden kann. Ein in den Fig. 7 bis 10 gezeigtes Fußteil 84 entspricht dem Fußteil 59 von Fig. 2. Ferner entsprechen Madenschrauben 85 und 86 der Madenschraube 66 von Fig. 2.

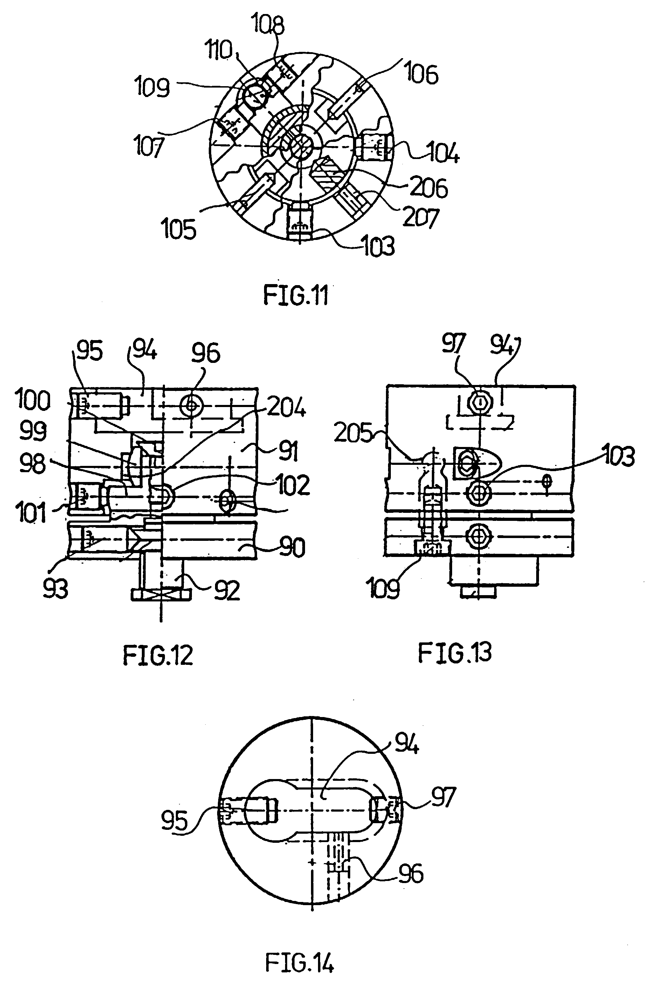

Es wird nun auf die Fig. 11 bis 14 Bezug genommen, wo ein weiterer Trägerkopfmodul mit einem oberen Teil 91 und einem unteren Teil 90 gezeigt ist. Der untere Teil 90 enthält ein Fußteil 92 und Madenschrauben 93 entsprechend dem Fußteil 59 bzw. der Madenschraube 66 von Fig. 2. An der Oberseite des oberen Teils 91 sind eine Führungsnut 94 sowie Madenschrauben 95,97 sowie eine Verstiftungsbohrung 96 vorgesehen, die der Nut 78 bzw. den Teilen 79 bis 81 von Fig. 5 und 6 entsprechen.

Von dem unteren Teil 90 erstreckt sich ein gestufter Ansatz 98 in eine entsprechende Ausnehmung in den oberen Teil 91 hinein. Auf der Stufe des Ansatzes 98 ist ein Ringteil 99 mit einer Außenfläche in der Form eines Kugelabschnitts angeordnet. Der Ringteil 99 wird durch den Kopf einer in den Ansatz 98 gedrehten Schraube 100 festgehalten. Der Ringteil 99 mit der kugelförmigen Außenfläche ist in einem weiteren Ringteil 204, der eine der kugelförmigen Außenfläche entsprechende Gegenfläche aufweist drehbar. Der Ringteil 204 ist in eine Ringschulter in dem oberen Teil 91 des Moduls eingesetzt und dort durch Arretierungsschrauben 105,106 gehaltert. Der gestufte Ansatz 98 weist eine kugelförmige Außenfläche auf, an der vier Stellschrauben 101 bis 104 angreifen. In tangentialer Anordnung sind Stellschrauben 107 und 108 vorgesehen, welche gegen einen mit dem unteren Teil 90 verbindbaren Schraubenbolzen 109 anlegbar sind, der in eine Langlochausnehmung 110 in dem oberen Teil 91 des in den Fig. 11 bis 14 gezeigten Moduls hineinragt. Die Stellschrauben 107 und 108 greifen an einem kugelförmigen Kopf 110 des Bolzens 109 an.

Der Oberteil 91 dieses Moduls kann über die Schrauben 101 bis 106 in beliebiger Richtung gegen die Zylinderachse des unteren Teils 90 verschwenkt und in der gewünschten Schwenkstellung arretiert werden.

Mit dem Bezugszeichen 206 ist eine Bohrbuchse bezeichnet, die zu einem in dem Ansatz 98 vorgesehenen Einsatzstück 207 ausgerichtet ist. Zur Fixierung kann das Einsatzstück 207 durch die Bohrbuchse 206 hindurch angebohrt und so das Oberteil 91 des Moduls mit dem unteren Teil 90 verstiftet werden. Bei einer erneuten Fixierung braucht nur das Einsatzstück 107 ausgetauscht zu werden.

Neben der Verschwenkung in zwei Drehrichtungen, in dem gezeigten Beispiel um maximal wenige Grad, läßt sich der obere Teil 91 des Moduls um seine Zylinderachse im Bereich der Langlochausdehnung 110 geringfügig durch die Stellschrauben 107,108 in einer dritten Drehrichtung verstellen.

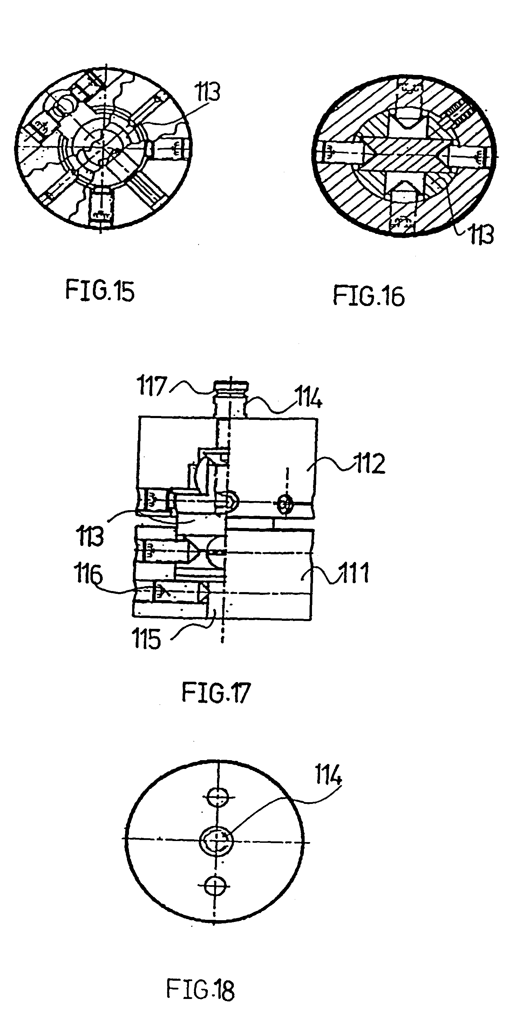

Es wird nun auf die Fig. 15 bis 18 Bezug genommen, wo ein Modul mit einem unteren Teil 111 und einem oberen Teil 112 gezeigt ist. Zwischen dem unteren Teil 111 und dem oberen Teil 112 erstreckt sich ein Zwischenstück 113. Der untere Teil des Zwischenstücks 113 entspricht dem Zapfen 72 von Fig. 4. Der obere Teil des Zwischenstücks 113 entspricht dem gestuften Ansatz 98 von Fig. 12. Entsprechend sind weitere in den Fig. 4 und 12 beschriebene Teile zur Winkel- oder Höhenverstellung des Moduls vorgesehen, worauf hier nicht weiter eingegangen wird.

Der obere Teil 112 weist einen Verbindungszapfen 114 auf. Der untere Teil 111 ist mit einer Ausnehmung 115 für den Eingriff eines solchen Verbindungszapfens 114 versehen. Mit dem Bezugszeichen 116 ist eine Madenschraube mit einer Konusspitze für den Eingriff in eine der Ringnut 117 des Zapfens 114 entsprechende Ringnut bezeichnet.

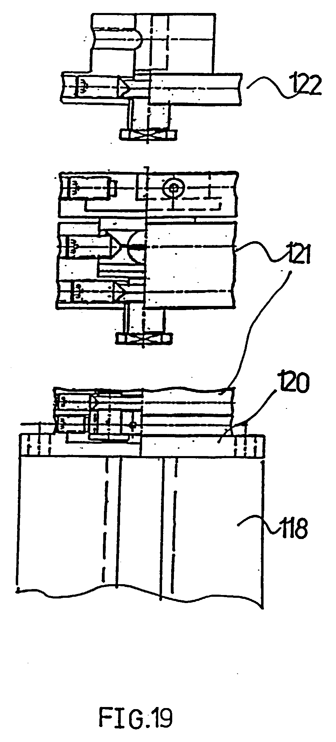

Es wird nun auf Fig. 19 Bezug genommen, wo in einer Explosionsdarstellung ein auf einer Trägersäule 118 angeordneter Trägerkopf dargestellt ist. Der Trägerkopf weist einen Basismodul 120 auf, der dem Basismodul 51 von Fig. 2 entspricht. Auf dem Basismodul ist ein Zwischenmodul 121 angeordnet, welcher dem Modul von Fig. 4 bis 6 entspricht. Ein auf den Modul 121 aufgesetzter weiterer Zwischenmodul 122 entspricht dem in Fig. 7 bis 10 gezeigten Modul. Der Trägeranschlag eines auf den Zwischenmodul 122 aufgesteckten Anschlagmoduls ist in drei zueinander senkrechten Koordinatenrichtungen translatorisch verstellbar.

Die Systemkomponenten des vorangehend beschriebenen Halterungs- und Spannsystems lassen sich ausschließlich mit Hilfe handelsüblicher Standardwerkzeuge montieren, demontieren und einstellen.

Da die Führungsnuten und Fußteile bzw. Verbindungszapfen und Zapfenstecklöcher übereinstimmen, lassen sich beliebige Modulkombinationen und damit dreidimensional sowohl translatorisch als auch rotatorisch verstellbare Trägerköpfe zusammenstellen.

## Patentansprüche

1. Trägerkopf für ein Halterungssystem zur Halterung von Werkstücken, insbesondere aus Blech oder einem anderen Lagenmaterial hergestellten Formteilen (6), in einer Vermessungsposition, wobei der Trägerkopf (5) einen gegen das Werkstück anlegbaren Trägeranschlag (9) aufweist,
dadurch gekennzeichnet,
daß der Trägeranschlag (9) in unterschiedlichen Einstellpositionen fixierbar ist.

2. Trägerkopf nach Anspruch 1,
dadurch gekennzeichnet,
daß der Trägeranschlag (9) zur Verstellung in bezug auf wenigstens eine Raumkoordinate translatorisch verschiebbar oder/und drehbar ist.

3. Trägerkopf nach Anspruch 1 oder 2,
dadurch gekennzeichnet,
daß mehrere, je nach gewünschten Verstellfunktionen kombinierbare Trägerkopfmodule vorgesehen sind.

4. Trägerkopf nach Anspruch 3,
dadurch gekennzeichnet,
daß der Trägerkopf (5) zur Translationsverstellung des Trägeranschlags (9) gegeneinander in einer Führung (59,55;61,70;78,84;94,92) verschiebbare Module (120-122) aufweist.

5. Trägerkopf nach Anspruch 3 oder 4,
dadurch gekennzeichnet,
daß der Trägerkopf (5) zur Translationsverstellung des Trägeranschlags (9) gegeneinander kreuzweise verschiebbare Module (120-122) aufweist.

6. Trägerkopf nach einem der Ansprüche 1 bis 5,
dadurch gekennzeichnet,
daß der Trägerkopf (5) einen an einem Trägerteil des Halterungssystems montierbaren Basismodul (120), wenigstens einen Zwischenmodul (121,122) und einen den Trägeranschlag (9) aufweisenden Anschlagmodul umfaßt.

7. Trägerkopf nach Anspruch 6,
dadurch gekennzeichnet,
daß der Anschlagmodul auf den angrenzenden Zwischenmodul (122) aufsteckbar ist.

8. Trägerkopf nach einem der Ansprüche 1 bis 7,
dadurch gekennzeichnet,
daß der Trägerkopf (5) einen Modul mit zur Drehverstellung des Trägeranschlags (9) gegeneinander verschwenkbaren oder/und eine gemeinsame Achse verdrehbaren Modulteilen (90,91) aufweist.

9. Trägerkopf nach Anspruch 8,
dadurch gekennzeichnet,
daß einer der gegeneinander verschwenkbaren Modulteile (90,91) gegen eine Kugelführungsfläche (99) des anderen Modulteils (90) anliegt.

10. Trägerkopf nach einem der Ansprüche 3 bis 9,
dadurch gekennzeichnet,
daß die Führung eine hinterschnittene Führungsnut (55;61;78;94) in einem der gegeneinander verschiebbaren Module und einen von dem anderen Modul in die Führungsnut vorstehenden Nutenstein (59;70;84;92) umfaßt.

11. Trägerkopf nach Anspruch 10,
dadurch gekennzeichnet,
daß der Nutenstein gegen den anderen Modul senkrecht zur Führungsrichtung bewegbar und der andere Modul Einrichtungen zur Verklemmung des Nutensteins in der Führungsnut aufweist.
